# EUROPEAN PATENT APPLICATION

(11) **EP 4 169 662 A1**
(43) Date of publication of application: **26.04.2023**
(21) Application number: 22202359.0
(22) Date of filing: 19.10.2022
(51) Int. Cl.: B23K 37/02, B23K 31/02, B23K 9/00, B23K 9/028

(54) **WELDING ROBOT THAT FORMS UNIFORM WEAVING BEADS BY PERFORMING WELDING IN PRECISE WEAVING OPERATION ALONG THE WELDING LINE FORMED ON THE STEEL PIPE**

(30) Priority: 20.10.2021 KR 20210139954; 20.10.2021 KR 20210139955
(71) Applicant: Kim, Jung Hyun, Incheon 21685 (KR)
(72) Inventor: Kim, Jung Hyun, Incheon 21685 (KR)
(74) Representative: Frenkel, Matthias Alexander

(57) **Abstract**

The present invention provides a welding robot that performs the elaborate weaving movements of skilled technicians and welds along the welding lines formed on the joints of the adjoined steel pipes.

## Description

### Field of the Invention

Embodiments of the inventive concept described herein relate to a welding robot that forms uniform weaving beads by performing welding in precise weaving operation along the welding line formed on the steel pipe.

### Background of the Invention

Welding is a generic term for the metallurgical binding of metals and refers to the method of joining two solid metals by applying heat and pressure to metallic materials of the same or different types.

A smart factory refers to a factory where all processes, from the production and packing of products to the inspection of machines, are performed automatically and is regarded as the key to Industry 4.0, where robotic technology and information and communication technology (ICT) are integrated to the factories which perform the processes based on the traditional human resources.

However, the realization of a smart factory in the field of welding requires the welding robot arms to accurately mimic the hand movements of skilled welders; therefore, much research and development are being done to achieve this goal.

In other words, the protruding band formed on the deposition area during the welding process is called welding beads; the weaving beads, which are related to uniform welding, can be formed only when the welding tip is moved by the welding technician's rod on the welding line at a constant speed and angle in a zig-zag manner, without concentrating the tip at one place on the welding line.

In particular, if the parent materials, such as steel pipes, are welded horizontally, the welding should be performed along the rotation trajectory while weaving the welding line on the joint of the steel pipes in a zig-zag manner; in order to prevent the welding part from flowing instantaneously due to gravity and forming uneven weaving beads, an elaborate movement of the welding tip close to the parent material or tilted at a certain angle is needed.

If a welding robot that can incarnate the abovementioned elaborate weaving movements of a skilled technician exists, we should be able to realize smart factories for the field of CO2 welding.

### Summary of the Invention

The welding robot in the present invention welds on the carriage moving on the rails along the rotation trajectories on the welding line, and it is advantageous that the actuator allows the formation of the weaving beads with uniform welded parts as if the parts were welded by the elaborate movements of welding rods by skilled technicians.

The technical objects of the inventive concept are not limited to the above-mentioned ones, and the other unmentioned technical objects will become apparent to those skilled in the art from the following description.

In accordance with an aspect of the inventive concept, there is provided a welding robot that performs welding in a way that the weaving beads are formed on the welding line on the hollow cylindrical parent material and consists of a carriage moving along the rail on the rotation track formed along the outer circumference of the parent material; a welding tip placed on the said carriage to weld the parent material and actuators that operate the said welding tip, which includes the first actuator to move the said welding tip in a straight line and the second actuator to move the said welding tip in a straight line which is perpendicular to the direction of movement caused by the first actuator.

### Brief Description of Drawings

The above and other objects and features will become apparent from the following description with reference to the following figures, wherein like reference numerals refer to like parts throughout the various figures unless otherwise specified, and wherein:
Fig. 1 shows the perspective view of the welding robot in the present invention.
Fig. 2 shows the perspective view of the welding robot in the present invention placed on the parent material.
Fig. 3 shows the conceptual view of the welding robot in the present invention maintaining an even distance to the parent material using the second actuator and performing weaving movements using the first and third actuators.
Fig. 4 shows the conceptual view of the welding robot in the present invention maintaining an even distance to the parent material using the second actuator and controlling the posture using the fourth actuator.
Fig. 5 is the flow chart that shows the control methods for the welding robot in the present invention.

### Detailed Description of Embodiments

The above and other aspects, features and advantages of the invention will become apparent from the following description of the following embodiments given in conjunction with the accompanying drawings. However, the inventive concept is not limited to the embodiments disclosed below, but may be implemented in various forms. The embodiments of the inventive concept are provided to make the disclosure of the inventive concept complete and fully inform those skilled in the art to which the inventive concept pertains of the scope of the inventive concept.

The terms used herein are provided to describe the embodiments but not to limit the inventive concept. In the specification, the singular forms include plural forms unless particularly mentioned. The terms "comprises" and/or "comprising" used herein does not exclude presence or addition of one or more other elements, in addition to the aforementioned elements. Throughout the specification, the same reference numerals dente the same elements, and "and/or" includes the respective elements and all combinations of the elements. Although "first", "second" and the like are used to describe various elements, the elements are not limited by the terms. The terms are used simply to distinguish one element from other elements. Accordingly, it is apparent that a first element mentioned in the following may be a second element without departing from the spirit of the inventive concept.

Unless otherwise defined, all terms (including technical and scientific terms) used herein have the same meaning as commonly understood by those skilled in the art to which the inventive concept pertains. It will be further understood that terms, such as those defined in commonly used dictionaries, should be interpreted as having a meaning that is consistent with their meaning in the context of the specification and relevant art and should not be interpreted in an idealized or overly formal sense unless expressly so defined herein.

Hereinafter, exemplary embodiments of the inventive concept will be described in detail with reference to the accompanying drawings.

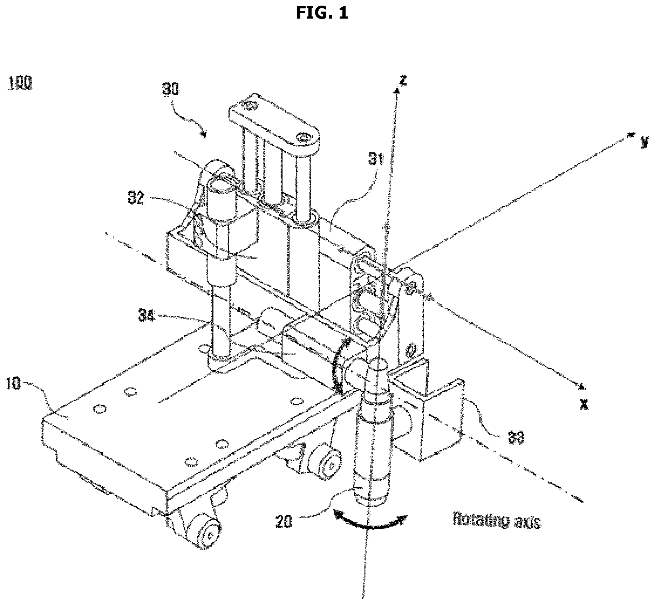

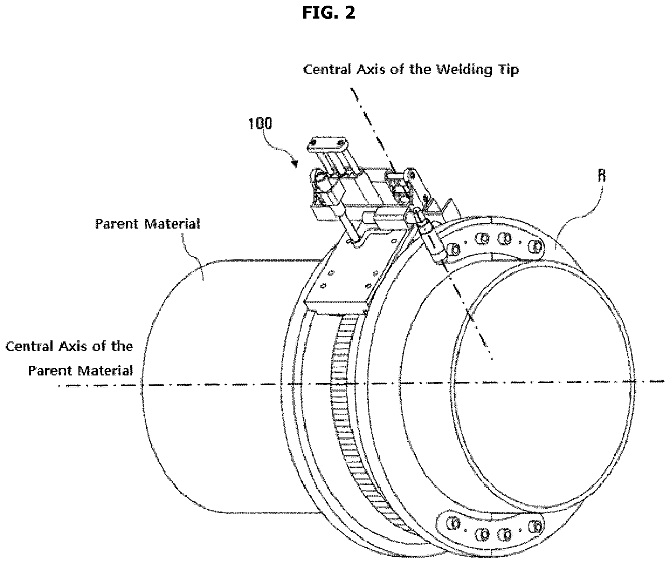

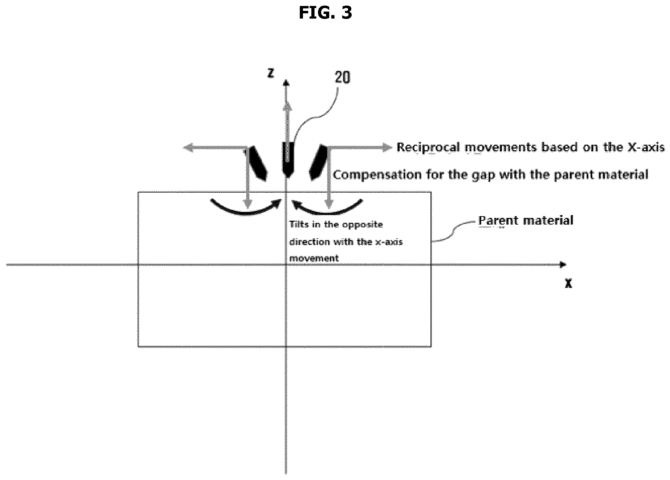

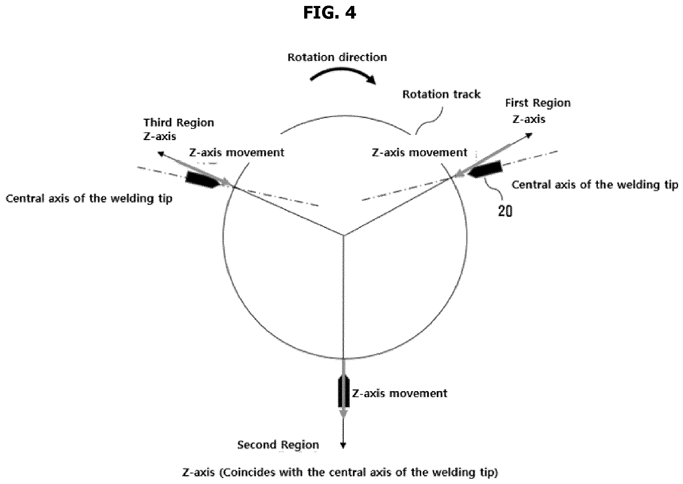

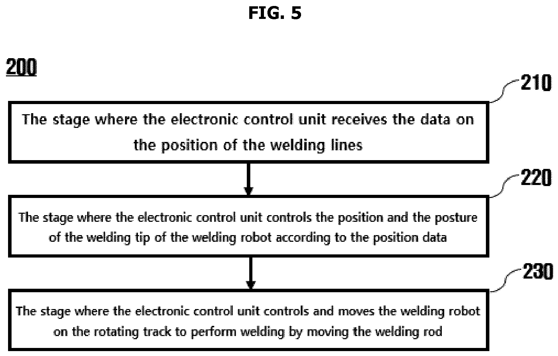

The welding robot in the present invention (100) and the control methods for the welding robot (200) is explained as shown in the diagrams below. Fig. 1 shows the perspective view of the welding robot in the present invention, Fig. 2 shows the perspective view of the welding robot in the present invention placed on the parent material, Fig. 3 shows the conceptual view of the welding robot in the present invention maintaining an even distance to the parent material using the second actuator and performing weaving movements using the first and third actuators, Fig. 4 shows the conceptual view of the welding robot in the present invention maintaining an even distance to the parent material using the second actuator and controlling the posture using the fourth actuator, and Fig. 5 is the flow chart that shows the control methods for the welding robot in the present invention.

The welding robot in the present invention (100) can perform welding so that the weaving beads are formed on the welding line on the hollow cylindrical parent material (e.g., welds so that the weaving beads would form on the joint of a pair of adjoined steel pipes). The welding methods applied to the welding robot in the present invention (100) may include, but are not limited to, plasma welding or TIG welding with an inert gas supply. The welding robot in the present invention (100) may include a carriage, sensors (not shown), welding tip (20), actuators (30), and electronic control unit (not shown).

The carriage (10) may be a component moving along the rotation track formed along the outer circumference of the parent material and can be installed on the rail (R). As such, the carriage (10) may also be called a "cart." In other words, the carriage (10) can be a means of transportation that allows the welding robot in the present invention (100) to rotate and move along the outer circumference of the parent material.

The sensor (not shown) senses the welding line on the parent material to generate data about the position of the welding line. For example, the sensor may be a visual sensor that processes the images on the welding line marked on the parent material and generates the data about the position of the welding line, but the type of sensor used in the welding robot in the present invention may not be limited to the visual sensor. The data of the positions of welding lines generated by the sensor can be transmitted to the electronic control unit (not shown), and the electronic control unit can control the actuators (30), based on the said data, to allow the welding robot in the present invention (100) to perform welding. The sensor (not shown) can be placed on the carriage (10) or installed or placed at the side of the welding tip (20) or actuators (30).

The welding tip (20) may be a component placed on the carriage (10) to perform welding. The welding tip (20) can perform welding on the carriage (10) while moving along the rotation track formed around the outer circumference of the parent materials and, at the same time, mimicking the elaborate rod movements of skilled technicians using the actuators (30).

The actuators (30) may be components that are controlled by the electronic control unit (not shown) to provide driving power for the operation of the welding tip (20). For this purpose, the actuators (30) may include the first actuator (31), second actuator (32), third actuator (33), and fourth actuator (34).

The first actuator (31) can move the welding tip (20) in a straight line, and the second actuator (32) can move the welding tip (20) in a straight line that is perpendicular to the direction of movement by the first actuator (31). The first actuator (31) moves the welding tip (20) in a straight line based on the x-axis that is lined up with the central axis of the parent material, and the second actuator (32) moves the said welding tip in a straight line based on the z-axis that is perpendicular to the x-axis and corresponds with the central axis of the welding tip (20) when the welding tip (20) is erected upright. On the other hand, the welding robot in the present invention (100) forms the "transport coordinate system" where the z-axis moves together as the welding robot in the present invention moves along the rotation track.

In this case, the first actuator (31) forms the thickness of the weaving beads by moving the welding tip (20) in a reciprocating movement within a certain area based on the x-axis, and the second actuator (32) moves the welding tip (20) based on the z-axis to determine the distance between the welding tip (20) and the parent material based on the central axis of the welding tip (20).

In other words, when the welding robot in the present invention (100) is moved by the carriage (10) along the rotation track, the first actuator (31) moves in a reciprocating movement along the central axis of the parent material to realize the welding rod movement that is similar with the welding rod movement by the skilled technicians who weld in a zig-zag motion and a weaving pattern to the left and right of the welding line along the rotation trajectory. Also, the second actuator (32) can adjust the distance between the welding tip (20) and the outer side of the parent material, and it can maintain the distance between the welding tip (20) and the parent material at a certain value while the welding tip (20) is tilted (the third actuator) or the slanted at an erected posture (the fourth actuator, the posture where the central axis of the welding line is slanted at a certain angle against the z-axis) in order to improve the welding quality.

In addition, the third actuator (33) can tilt the welding tip (20) in a reciprocating movement based on the x-axis, and the fourth actuator (34) can rotate the welding tip (20) based on the x-axis (x-axis as the rotation axis) to determine the posture of the welding tip (20).

In this case, the third actuator (33) can tilt the welding tip (20) in a reciprocating movement based on the x-axis (reciprocating pendular movement) so that the welding tip can be tilted in the opposite direction when it is placed in the reciprocating movement to one direction to another by the first actuator (31). The fourth actuator (34) slants the welding tip (20) at a certain angle based on the z-axis according to the position of the welding robot in the present invention (100) in order to form uniform weaving beads by preventing the beads from flowing. Meanwhile, the detailed explanation of the method used by the third actuator (33) and fourth actuator (34) to tilt or control the posture of the welding tip (20) shall be discussed later.

The electronic control unit (not shown) can receive the signal on the position of the welding line from the sensor (not shown), electronically control the carriage (10), welding tip (20), and actuators (30) to align the welding robot in the present invention (100) to the welding line and perform welding by mimicking the weaving movements of the skilled welding technicians.

Meanwhile, the movement of the welding robot (100) in the present invention on the carriage (10) along the rotation trajectory and the interlocked operation of the first (31), second (32), third (33), and fourth actuator (34) can elaborately mimic the weaving movements of the welding rod by the welders. In this case, the operation of the first actuator (31) can be interlocked with the third actuator (33). In other words, when the welding tip (20) makes reciprocating movements due to the first actuator (31), the third actuator (33) works in connection with the first actuator (31) to interlock the tilting direction according to the direction of the reciprocating movements and prevent the welding beads from flowing down. In addition, the operation of the second actuator (32) can be interlocked with the third (33) and the fourth actuators (34). In other words, if the welding tip (20) is tilted by the third (33) and the fourth actuators (34), or if the posture of the welding tip (20) is controlled to slant the reference axis of the tip based on the z-axis, in order to compensate for the distance between the welding tip (20) and the parent material arising therefrom, the second actuator (32) can move the welding tip (20) along the z-axis and maintain an appropriate distance with the parent material. Further, the fourth actuator (34) can operate in response to the areas the welding tip (20) is positioned on the rotation track. In other words, the fourth actuator (34) can adjust the posture of the welding tip according to its position on the rotation track to prevent the welding beads from flowing.

The control methods for the welding robot in the present invention are explained hereunder. The control methods for the welding robot in the present invention (200) may consist of the stage where the electronic control unit (not shown) receives the data on the position of the welding lines detected by the sensor (not shown) (210); the stage where the electronic control unit controls the position and the posture of the welding robot (100) and the welding tip (20) according to the position data (220); and the stage where the electronic control unit controls and moves the welding robot (100) on the rotation track formed along the outer circumference of the parent material to perform the welding (230).

The stage where the electronic control unit (not shown) receives the data on the position of the welding lines detected by the sensor (not shown) (210) may be the stage where the sensor detects the welding lines marked on the parent material and transmits the position data of the said welding lines in order to allow the electronic control unit to acquire the coordinate values for the absolute position of the welding line or the coordinate values for the relative position of the welding line with reference to the position of the welding robot (100).

The stage where the electronic control unit controls the position and the posture of the welding robot (100) and the welding tip (20) according to the position data (220) may be the stage where the electronic control unit controls the welding robot (100) to align the robot to a proper posture at a proper starting position (initial aligning stage). In this case, the electronic control unit can control the first actuator (31) to align the welding tip (20) of the welding robot (100) at a position identical to the starting position of the welding line based on the x-axis or control the second actuator (32) to maintain the preset distance (an appropriate distance to weld) between the welding tip (20) of the welding robot (100) and from the parent material based on its central axis or control the third (33) and the fourth actuators (34) to maintain the upright condition (proper posture) the welding tip (20) of the welding robot (100) based on the central axis of the welding tip (20) of the welding robot (100).

The stage where the electronic control unit controls the welding robot (100) and moves the welding robot (100) on the rotation track formed along the outer circumference of the parent material to perform the welding (230) may refer to the stage where the electronic control unit controls the carriage (10) to move the welding robot (100) along the rotating track of the parent material and at the same time elaborately mimics the welding rod movements of the welders by controlling the welding tip (20) and the actuators (30) to weld the parent material.

As mentioned above, the electronic control unit can control the first actuator (10) to move the welding tip (20) of the welding robot (100) in a straight line based on the x-axis, control the second actuator (20) to move the welding tip (20) of the welding robot (100) in a straight line based on the z-axis, control the third actuator (33) to tilt the welding tip (20) of the welding robot (100) based on the x-axis, and control the fourth actuator (34) to rotate the welding tip (20) of the welding robot (100) based on the x-axis to determine the posture of the welding tip (20) of the welding robot (100).

In this case, the electronic control unit can control the first actuator (31) to cause the welding tip (20) of the welding robot (100) to weld by making reciprocating movements, control the third actuator (33) to cause the welding tip (20) of the welding robot (100) to weld by making reciprocating tilting movements (pendular movements), and control the fourth actuator (34) to cause the welding tip (20) of the welding robot (100) to weld at a posture that is upright or slanted in one direction or another against the z-axis.

In detail, the electronic control unit controls the third actuator (33) to weld by tilting the welding tip (20) of the welding robot (100) to one direction when it moves to the other direction based on the x-axis or vice versa. In other words, the electronic control unit controls the third actuator (33) to tilt the welding tip (20) of the welding robot (100) to the direction that is opposite from the direction of movement in the x-axis and prevents the thermal blind spot from forming on the welding surface of the parent material according to the position of the welding tip (20) of the welding robot (100) during its reciprocating movement in order to form a uniform welded part through thermally uniform welding.

In addition, the electronic control unit controls the fourth actuator (34) to slant the welding tip (20) of the welding robot (100) to slant in the direction of the rotation against the z-axis when the welding tip (20) of the welding robot (100) is positioned in the first region of the rotation track (the track that makes rotating movement due the carriage), to erect the welding tip (20) of the welding robot (100) upright against the z-axis when it is positioned in the second region of the rotation track, and to slant welding tip (20) of the welding robot (100) in the opposite direction of the rotation against the z-axis when it is positioned in the third region of the rotation track. Such posture determination prevents the welding beads from flowing during the welding process according to the position of the welding tip (20) of the welding robot (100) on the rotation track. In this case, the welding tip (20) of the welding robot (100) can make sequential clockwise movements between the first, second, and third regions on the rotation track. Preferably, the first region may refer to the region with a rotation angle of 0 to 120 degrees on the rotation track, the second region may refer to the region with a rotation angle of 120 to 240 degrees on the rotation track, and the third region may refer to the region with the rotation angle of 240 to 360 degrees on the rotation track, but these may not be limited thereto. Furthermore, the posture of the welding tip (20) of the welding robot (100) may be controlled to slant the central axis of the welding tip (20) of the welding robot (100) by 30 degrees in the direction of the movement in the first region, to maintain the central axis of the welding tip (20) of the welding robot (100) to stay upright based on the z-axis in the second region, and to slant the central axis of the welding tip (20) of the welding robot (100) by 30 degrees in the opposite direction of the movement in the third region, but these may not be limited thereto.

In addition, in the control methods for the welding robot in the present invention (200), the electronic control unit controls the second actuator (32) to compensate for the distance between the welding tip (20) of the welding robot (100) beyond the appropriate welding distance by the tilting of the third actuator (33) and the posture control of the fourth actuator (34), and causes the welding robot to perform welding by controlling the welding tip (20) of the welding robot (100) to maintain the preset distance from the parent material under the situation where the welding tip (20) of the welding robot (100) is tilted by the third actuator (33) and its posture is controlled by the fourth actuator (34) based on the central axis of the welding tip (20) of the welding robot.

Although the exemplary embodiments of the inventive concept have been described with reference to the accompanying drawings, it will be understood by those skilled in the art to which the inventive concept pertains that the inventive concept can be carried out in other detailed forms without changing the technical spirits and essential features thereof. Therefore, the above-described embodiments are exemplary in all aspects, and should be construed not to be restrictive.

## Claims

1. A welding robot that performs welding so that the weaving beads are formed along the welding line on hollow cylindrical parent material,
consisting of a carriage moving along the rail on the rotation track formed along the outer circumference of the parent material;
a welding tip placed on the said carriage to weld the parent material; and
actuators that operate the said welding tip,
of which the said actuators include the first actuator that moves the said welding tip in a straight line and the second actuator that moves the said welding tip in a straight line that is perpendicular to the direction of movement caused by the said first actuator, the third actuator that tilts the said welding tip in a reciprocating movement based on the x-axis and the fourth actuator that rotates the said welding tip based on the x-axis to determine the posture of the said welding tip,
where the said first actuator moves the said welding tip in a straight line based on the x-axis that is lined up with the central axis of the parent material, and the said second actuator moves the said welding tip in a straight line based on the z-axis that is perpendicular to the x-axis and corresponds with the central axis of the welding tip when the welding tip is erected upright, and the said first actuator forms the thickness of the weaving beads by moving the said welding tip in a reciprocating movement,
the said second actuator moves the said welding tip to determine the distance between the said welding tip and the parent material based on the central axis of the said welding tip; the operation of the said first actuator is interlocked with the said third actuator, the operation of the said second actuator is interlocked with the said third and fourth actuators, and the operation of the said fourth actuator works in response to the regions where the said welding tip is located on the rotation track,
the said welding tip moves sequentially in a clockwise direction between the first, second, and third regions on the rotation track, where the first region refers to the region with the rotation angle of 0 to 120 degrees on the rotation track, the second region refers to the region with the rotation angle of 120 to 240 degrees on the rotation track, and the third region refers to the region with the rotation angle of 240 to 360 degrees on the rotation track, and
the said fourth actuator controls the said welding tip so that the central axis of the said welding tip is slanted by 30 degrees in the direction of the rotation based on the z-axis in the first region, upright based on the z-axis in the second region, and slanted by 30 degrees in the opposite direction of the rotation based on the z-axis in the third region.
